# EUROPEAN PATENT APPLICATION

(11) **EP 0 788 748 A1**
(43) Date of publication of application: **13.08.1997**
(21) Application number: 96500013.6
(22) Date of filing: 02.02.1996
(51) Int. Cl.: A23N 12/00

(54) **Helical wringing roller for fruit washing machines**

(71) Applicant: FOOD MACHINERY ESPANOLA S.A., E-46012 Valencia (ES)
(72) Inventor: Sanchez de Leon Rodriguez Roda, Juan Antonio, E-46012 Valencia (ES)
(74) Representative: Blumbach, Kramer & Partner

(57) **Abstract**

The object of the Patent is a helical wringing roller applicable to drying rollers in lines for washing fruits, in particular citrus fruits.

The roller comprises a rotatory rigid cylindrical core (1) over which spaced out spacing rings (2) are inserted, upon which rods (3) are arranged symmetrically and longitudinally along a helical path, the pitch being the same for all rods.

The longitudinal axes of the drying and wringing rollers are parallel and the distance between them is less than the sum of their radii.

## Description

### OBJECT

The invention subject of this Patent application comprises a **helical wringing roller for fruit washing-machines.**

In particular, the object of the invention applies specifically to the wringing of fruit drying rollers that are invariably provided in washing lines in Sheds where fruits and in particular citrus fruits are processed (prepared and packaged).

### BACKGROUND OF THE INVENTION

Picked fruits are carried in bulk from the field to the processing Shed in manipulable crates.

On arriving in the Shed, the crates are emptied by hand or machine and the fruits then undergo the first of the preparatory operations to be later marketed, which consists in washing the fruits in lines which generally comprise means that continuously carry out the following operations: dipping in reservoirs, brushing on passing and drying.

The latter operation must be carried out in order for the fruit skin to be ready to duly undergo the following in the processing cycle: phytopathologic treatment, polishing, labelling, etc.

Since heat drying of fruits is inadequate because of the adverse effect raising the temperature would have on their quality, the drying operation is carried out by mechanical means.

The process followed generally, typical of prior art and being in the public domain, consists in having the wet fruits pass rollers which comprise a stiff rotatory cylindrical core over which annular cylindrical parts made of an absorbent material (for instance flexible polyurethane foam) are snugly inserted.

Now then, as the fruits pass such drying rollers and the rollers retain the surface water the fruits carry, their absorbent capacity is gradually saturated and the operation hence becomes less efficient.

To overcome this limitation, drying rollers are wrung permanently, this taking place in the known process using a rigid roller arranged with its longitudinal axis parallel to the drying roller axis, the distance between both axes being less than the sum of their respective radii and the lateral surface of the rigid roller therefore intersecting the lateral surface of the drying roller, and thus, since both rollers turn in opposite directions, the surface of the rigid roller compresses the resilient surface of the drying roller causing it to release the water absorbed.

The drawback of this process lies in its reduced efficiency for:
- only a small area of the drying roller lying between two close generators is compressed and wrung;
- the water wrung from the drying roller drops onto the lateral surface of the wringing roller which returns it in part, since it turns in opposition to the drying roller, thereby reducing wringing efficiency;
- dirt or sand particles still adhered to the fruit skin are retained by the drying roller and compacted onto its surface by the wringing roller, reducing its capacity to absorb water.

### DESCRIPTION OF THE INVENTION

The aim of the invention subject of this Patent application is to eliminate the disadvantages typical of the above-described known process, having been devised and designed bearing such objective in mind.

The structure of said object has therefore been changed and its operational characteristics consequently improved, converting it into a substantially different object.

First of all, the wringing roller is no longer cylindrical in shape with a continuous lateral surface.

Instead, the new wringing roller subject of the invention has a discontinuous lateral surface, for it comprises rods arranged symmetrically about a cylindrical core, albeit spaced from the core since peripherally supported by spacing rings lying on planes perpendicular to the axis of the cylindrical core, over which they are inserted.

This arrangement yields the following advantages:
- the drying roller compression and wringing areas are differentiated and increased;
- the water extracted is allowed to pass between the rods and drop onto the cylindrical core, from which it is drained;
- the water wrung is prevented from returning to the drying roller, for the small diameter of the rods prevents it from adhering thereto.

Another material characteristic of the new wringing roller lies in the position of the rods relative to the cylindrical core, supported on and fixed to the rings provided on such core.

Indeed, if the longitudinal axes of the rods were to lie parallel to the cylindrical core, a meshing effect would follow between both drying and wringing rollers which would result in alternative pressures and harmful vibratory movements in the respective axes.

The rods are therefore arranged along a helical path about the imaginary cylinder enveloping the spacing rings, the pitch of such helical path being relatively high and identical for all rods.

This arrangement moreover allows the rods to slide relative to the lateral surface of the drying roller, which enhances the elimination of potential residual adherences.

### BRIEF DESCRIPTION OF THE DRAWINGS

In order to provide a fuller description of the invention and contribute to the complete understanding of its formal characteristics, drawings are attached which schematically show different features of a preferred embodiment of the invention.

In the drawings:
Figure 1 shows a cross-section of the drying and wringing rollers together, in the working position.
Figure 2 is a side elevation view of the wringing roller, showing the helical arrangement of the rods.

### DESCRIPTION OF A PREFERRED EMBODIMENT

In order to clearly show the nature and scope of the advantageous application of the wringing roller subject of the invention, its structure and operation will be described hereinafter with reference to the drawings, which show a preferred embodiment of said object for informative purposes and should hence be construed in their broadest sense, and not used to limit the application and contents of this invention.

The new wringing roller subject of the invention comprises a rotatory rigid cylindrical core (1) over which spacing rings (2) are snugly inserted to lie on planes perpendicular to the longitudinal axis of the cylindrical core, suitably spaced out.

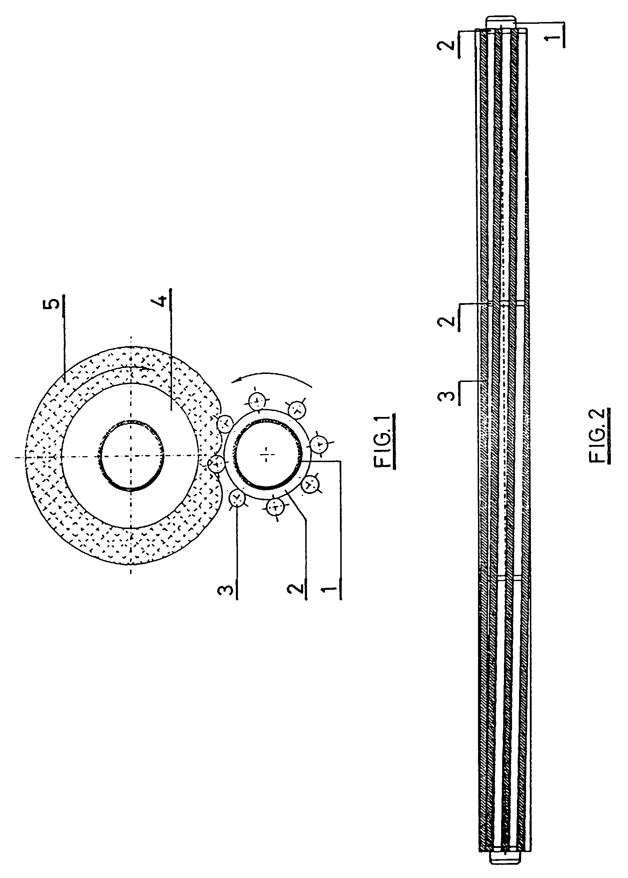

The rods (3) are arranged symmetrically about the core (1), jutting out from the spacing rings (2) and fixed thereto longitudinally, albeit along a helical path, as shown in figure 2, the pitch being the same in all rods.

The wringing roller turns in a direction counter the drying roller which, as shown in figure 1, has a known structure comprising a rigid cylindrical core (4) over which annular abutting cylindrical parts (5) made of absorbent material are snugly inserted.

The longitudinal axes of both drying and wringing rollers are parallel and the distance between them is less than the sum of their respective radii, taking the radius of the wringing roller to be the radius of an imaginary enveloping cylinder, escribed with respect to the rods (3).

Therefore, upon the reverse rotation of the rollers, the wringing rods (3) compress the absorbent rings (5) and remove the water they hold whilst particles that may have stuck to their surface are at the same time detached due to the rods (3) sliding relative to the rings (5).

## Claims

1. A helical wringing roller for fruit washing-machines, essentially **characterised** by comprising a rigid cylindrical core (1) turning in a direction counter the rotation of the drying roller, over which spacing rings (2) are snugly inserted, lying on planes perpendicular to the longitudinal axis of the cylindrical core (1) and suitably spaced out, symmetrically distributed rods (3) being arranged on and fixed to the rings longitudinally, albeit along a helical path, all rods having the same pitch.

2. A helical wringing roller for fruit washing-machines, as in claim 1, **characterised** in that the longitudinal axes of the drying and wringing rollers are parallel and the distance between them is slightly less than the sum of their respective radii, taking the radius of the wringing roller to be the radius of an imaginary enveloping cylinder, escribed with respect to the rods (3).
